# EUROPEAN PATENT SPECIFICATION

(11) **EP 2 747 620 B1**
(45) Date of publication and mention of the grant of the patent: **14.09.2016**
(21) Application number: 12856366.5
(22) Date of filing: 22.11.2012
(51) Int. Cl.: A47J 37/12

(54) **FOOD COOKING**
VERFAHREN ZUM KOCHEN VON LEBENSMITTELN
CUISSON D'ALIMENTS

(30) Priority: 05.12.2011 GB 201120838
(43) Date of publication of application: 02.07.2014
(73) Proprietor: Shelemey, Haim, London NW4 1QY (GB)
(72) Inventor: Shelemey, Haim, London NW4 1QY (GB)
(86) International application number: PCT/IL2012/050477
(87) International publication number: WO 2013/084224

(56) References cited:
- WO-A1-01/56392
- US-A- 3 316 833
- US-A- 3 567 070
- US-A- 5 778 767
- US-A1- 2004 139 861

## Description

The present invention relates to a device and method for cooking food by submerging it in a hot liquid such as fat or oil.

Deep fat frying is a popular method of cooking a wide range of foodstuffs. Chips or fries, doughnuts, particulate food such as falafel, battered fish or other meat products, and vegetables are just some of the possibilities.

One cooking method involves placing the foodstuff in a basket and submerging the basket in a heated vat of fat or oil until the food is cooked. This has the advantage of being straightforward, but placing a large amount of food together in a single clump can lead to uneven cooking and reduced crispiness as the fat at the centre of the clump is cooled by the surrounding food.

To obtain more even cooking, a variety of cookers using conveyor belts have been developed which move the food through the fat while it is being cooked. One example of a conveyor belt cooker is WO-A-87/06811 which boils shrimp by pushing them through a reservoir with division plates spaced along an endless, perforated conveyor belt. Another example is US Patent No. 4,228,730 which cooks frozen French fries in a similar manner.

These devices take up significant space in a kitchen as they require a long reservoir through which the food can be moved in a straight line. They are also only suitable for solid foodstuffs which are not liable to breaking apart as they are pushed and dragged through the fat. Particulate foodstuff, such as falafel or meatballs, is very brittle and liable to break apart before it is cooked. What is needed is a more compact cooker which submerges and moves food through a reservoir of heated liquid in a more delicate manner.

US-A-2004/0139861 represents prior art within the meaning of Rule 43(1)(a) EPC. It describes a mould form fryer having a top conveyor disposed above an oil pan. Uncooked snack pieces are provided to the fryer oil pan by a bottom entrance conveyor. Snack pieces, once in oil within the fryer, meet with molding surfaces on the top conveyor. At the exit portion of the fryer, a bottom exit conveyor receives the cooked snack pieces from the top conveyor.

One aspect of the present invention provides a food cooker comprising a reservoir suitable for being filled with a heated cooking liquid to a liquid level, the reservoir comprising: a first conveyor belt movable in a first direction; and a second conveyor belt movable in a second direction opposite to the first direction; the first and second conveyor belts being spaced apart to define a path between them at least part of which passes beneath the liquid level, the path being sized to receive foodstuff and the opposing movements of the conveyor belts for drawing the foodstuff along the path through the heated cooking liquid in the reservoir in use; characterised in that the food cooker further comprises a drum for delivering foodstuff into the reservoir, the drum comprising: a plurality of laterally spaced apart holes, the drum being rotatable such that, as the drum rotates in use, foodstuff contained within the drum falls out of the bottom of the drum through the holes into the reservoir; wherein both the spacing between the laterally spaced apart holes and the speed of rotation of the drum are sufficient to ensure that, in use, a gap between adjacent pieces of foodstuff is sufficient to prevent significant local cooling of the heated cooking liquid as the foodstuff is drawn through the heated cooking liquid in the reservoir.

By providing two conveyor belts moving in contrary directions, the foodstuff is not dragged against a stationary surface but is carried gently through the cooking liquid. Delicate or particulate foodstuffs are therefore not damaged. The foodstuff is also not at risk of being crushed or broken by direct impact of the division plates of the above-mentioned prior art. Also, the foodstuff is held under the cooking liquid, preventing it from floating to the surface such that turning is not required during the cooking process. Additionally, the foodstuff is dropped into the cooking liquid from a rotating drum with spaced apart holes to ensure the foodstuff is spaced apart during cooking.

Preferably, first conveyor belt forms a first curve and the second conveyor belt forms a second curve, the first and second curves corresponding with one another and forming a curved path along which foodstuff is drawn in use. Advantageously, this creates a continuously curving path through the reservoir, increasing the distance traveled by the foodstuff relative to a straight path, thus reducing the length of reservoir needed for a given cooking time and speed of movement of the foodstuff.

Preferably, the first conveyor belt is an endless conveyor belt and the first curve is created by a lower portion of the first conveyor belt hanging down under its own weight, and wherein the second conveyor belt is an endless conveyor belt and the second curve is created by an upper portion of the second conveyor belt hanging down under its own weight. The loose hanging of the conveyor belts also holds the foodstuff gently, further preventing damage or crushing.

Preferably, at least a portion of each of the first and second conveyor belts which define the path are pliable. As the portions of the conveyor belts which define the path are pliable, it further ensures that the foodstuff is not crushed.

Another aspect of the present invention provides a method of cooking food comprising: rotating a drum having a plurality of laterally spaced apart holes such that, as the drum rotates, foodstuff contained within the drum falls out of the bottom of the drum through the holes into a reservoir; receiving the foodstuff between two spaced apart, pliable conveyor belts moving in opposite directions and defining a path between them sized to receive the foodstuff; and drawing the foodstuff in a curved path through a heated cooking liquid contained in the reservoir using the conveyor belts, the foodstuff being submerged under the heated cooking liquid for at least part of the path; wherein both the spacing between the laterally spaced apart holes and the speed of rotation of the drum are sufficient to ensure that a gap between adjacent pieces of foodstuff is sufficient to prevent significant local cooling of the heated cooking liquid as the foodstuff is drawn through the heated cooking liquid in the reservoir.

Preferred embodiments of the present invention will now be described by way of an example and with reference to the accompanying drawings in which:
Figure 1 is a side section view through a cooker reservoir;
Figure 2 is a perspective view of the cooker reservoir with one side of the reservoir removed; and
Figure 3 is a perspective view of a cooker embodying the present invention.

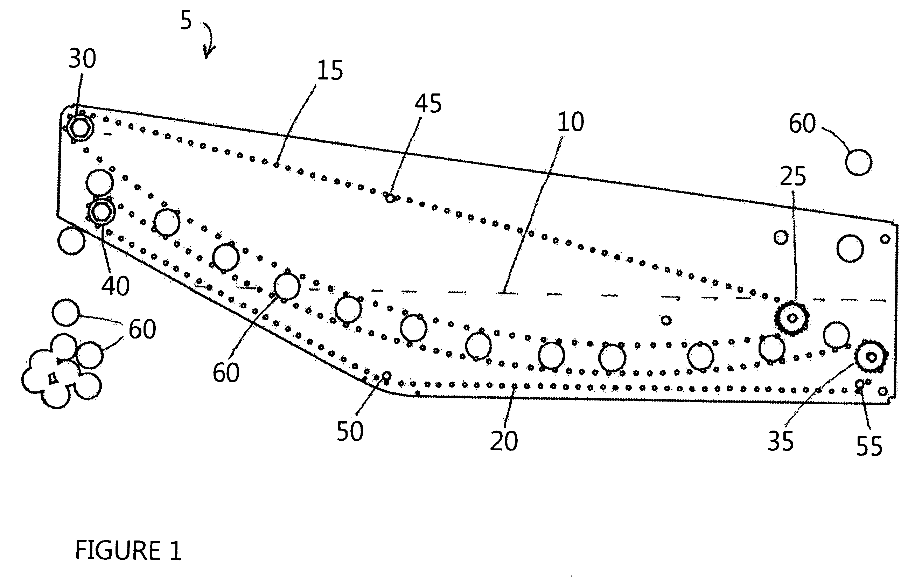

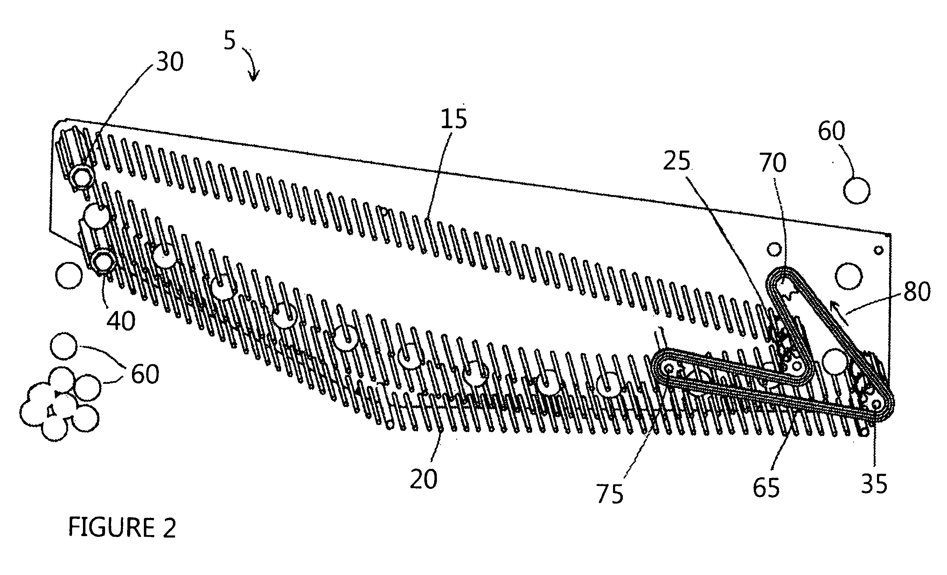

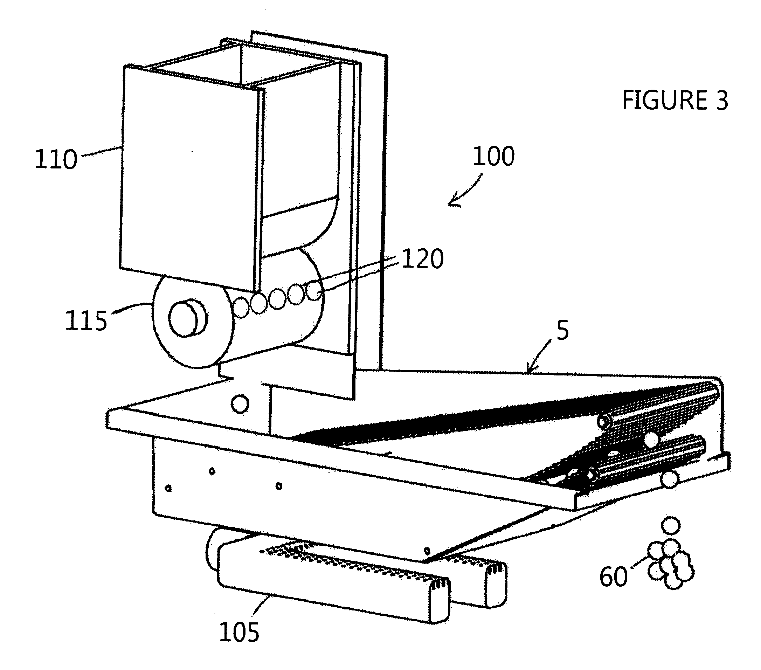

Figures 1 and 2 show a cooker reservoir 5 containing a cooking liquid 10 such as fat, oil or water. The cooking liquid is heated by, for example, gas burners or electrical elements 105 (illustrated in Figure 3) typically positioned below the reservoir 5. Two endless conveyor belts, forming an upper conveyor 15 and a lower conveyor 20, are positioned inside the reservoir 5. The conveyor belts are made from any suitable material such as a light, perforated belt, or an array of interconnected, thin, parallel metal bars, as indicated in Figure 2.

The upper conveyor 15 is carried by two rotatable supports. An upper driven support 25 is driven by a motor (not shown) and causes the upper conveyor 15 to move. An upper free support 30 either rotates freely or otherwise allows the upper conveyor 15 to pass freely over it as the upper conveyor 15 moves. The lower conveyor 20 is also carried by two supports, a lower driven support 35 which is driven by a motor (not shown) and causes the lower conveyor 20 to move, and a lower free support 40 which either rotates freely or otherwise allows the lower conveyor 20 to pass freely over it as the lower conveyor 20 moves. From the perspective of Figures 1 and 2, the upper driven support 25 is driven to rotate clockwise in use, to carry the upper conveyor 15 in a clockwise direction. The lower driven support 35 is driven in the opposite direction to the upper driven support 25, anti-clockwise from the perspective of Figures 1 and 2, to drive the lower conveyor 20 in an anti-clockwise direction at the same speed as the upper conveyer 15.

Each of the conveyor belts is looped loosely around its respective supports rather than being pulled taut. Consequently, each belt is pliable and falls or droops slightly under its weight. A top portion of the belt of the upper conveyor 15 is supported by a strut 45 positioned approximately midway between the upper driven support 25 and the upper free support 30. Additional support struts may be included as necessary depending upon the size and weight of the conveyor belt. However, a bottom portion of the belt of the upper conveyor 15 is not supported along its length between the upper driven support 25 and the upper free support 30, and therefore hangs downwards in a curve. The top portion is kept taut and the bottom portion allowed to hang down also by virtue of the upper driven support 25 pulling the upper conveyor 15 from the top portion and round to the bottom portion.

Similarly, an unsupported top portion of the lower conveyor 20 hangs downwards in a curve but a bottom portion is supported by two or more struts 50, 55 along the length of the lower conveyor 20 between the lower driven support 35 and the lower free support 40. The top portion is allowed to hang and the bottom portion kept taut also by virtue of the lower driven support 35 pulling the upper conveyor 20 from the bottom portion and round to the top portion.

The upper conveyor 15 and lower conveyor 20 are spaced apart from one another so that a path is created between them. Specifically, a continuously curving path is defined by the curve formed by the hanging lower portion of the upper conveyor 15 and the corresponding curve formed by the hanging upper portion of the lower conveyor 20. At least part of the path runs under the surface of the heated cooking liquid 10. Foodstuff 60 dropped into the reservoir 5 at a first end enters the path and the motion of the conveyors draws the foodstuff 60 along the path, submerging it completely beneath the heated cooking liquid 10, to a second end of the reservoir 5 where the cooked foodstuff drops from the reservoir 5 into any suitable collector (not shown).

As a result of the path between the upper conveyor 15 and lower conveyor 20 being curved over the full length of the path, the distance traveled by the foodstuffs in traversing the length of the reservoir 5 is greater than a straight path through the reservoir 5. Consequently, for the same speed of movement of the foodstuff 60 through the reservoir 5, the cooking time while the foodstuff is submerged in the heated cooking liquid 10 is greater for a given size of reservoir 5. The reservoir 5 can therefore be smaller than would be necessary if the path were straight. Since cooking times for some foodstuffs can be several minutes, and these foodstuffs must be moved continuously through the heated cooking liquid 10 at a speed sufficient to avoid significant local cooling of the heated cooking liquid 10, there can be an appreciable reduction in size of reservoirs embodying the present invention compared to reservoirs which move foodstuffs through a predominantly straight path.

Since the portions of the two conveyors 15, 20 either side of the path through which the foodstuff 60 is drawn are pliable and hang loosely under their own weight, the foodstuff 60 is gripped between the two conveyors 15, 20 only lightly. Additionally, the supports 25, 30, 35, 40 of the two conveyors 15, 20 are not aligned with each other at the entrance and exit to the path so do not constrict the entrance/exit. Delicate and/or particulate foodstuffs such as falafel balls 60 are therefore not crushed, damaged or broken apart during the journey through the heated cooking liquid 10.

The location of the supports 25, 30, 35, 40 and the struts 45, 50, 55 can be adjusted to create paths of different sizes, changing the gap between the conveyors as desired. In this way, foodstuffs of different sizes and shapes can be cooked.

The upper and lower driven supports 25, 35 may be driven separately by independent motors. Preferably, however, as illustrated in Figure 2, the driven supports 25, 35 are linked by a drive belt 65 and driven by a single motor. This saves space and ensures that the upper and lower conveyors 15, 20 move at the same speed. So that a single motor can drive the two conveyor belts 15, 20 in opposite directions, the drive belt 65 is looped around the upper and lower driven supports 25, 35 and two additional belt supports. A first belt support 70 above the driven supports 25, 35 and a second belt support 75 to the side of the driven supports 25, 35. In this way, the belt can pass around the inside of the upper driven support 25 and the outside of the lower driven support 35 so that when it is driven in the direction 80 indicated in Figure 2, the conveyors are driven in opposite directions. The motor can be linked to any of the supports 25, 35, 70, 75 but preferably it is linked to the first belt support 70 which is positioned high enough above the driven supports 25, 35 to be above the level of the heated cooking liquid 10 in the reservoir 5 to prevent the cooking liquid from leaking out of the reservoir 5.

Figure 3 shows a food cooking device 100 incorporating the reservoir 5 of Figures 1 and 2 described above. The food cooking device 100 further comprises a gas burner 105 for heating the cooking liquid 10, a foodstuff hopper 110 and a hollow rotatable drum 115 having one or more food-receiving holes 120. The hopper 110 is filled with suitable foodstuff 60. As the drum 115 is caused to rotate, the foodstuff 60 falls into the top of the drum 115 from the hopper 110 through the holes 120. As the drum 115 continues rotating the foodstuff 60 falls out the bottom of the drum 115 into the reservoir 5. The speed of rotation of the drum 110 can be adjusted to ensure a suitable gap between sequential pieces of foodstuff 60. Similarly, the holes 120 in the drum 115 are spaced apart sufficiently to prevent local cooling of the heated cooking liquid 10 between adjacent pieces of foodstuff 60.

Preferred embodiments of the present invention have been described by way of an example only. The skilled person will appreciate that variations to these embodiments can be made without departing from the scope of the claims.

## Claims

1. A food cooker comprising a reservoir (5) suitable for being filled with a heated cooking liquid (10) to a liquid level, the reservoir comprising:
a first conveyor belt (15) movable in a first direction; and
a second conveyor belt (20) movable in a second direction opposite to the first direction;
the first and second conveyor belts being spaced apart to define a path between them at least part of which passes beneath the liquid level, the path being sized to receive foodstuff (60) and the opposing movements of the conveyor belts for drawing the foodstuff along the path through the heated cooking liquid (10) in the reservoir in use;
**characterised in that** the food cooker further comprises a drum (115) for delivering foodstuff into the reservoir, the drum comprising:
a plurality of laterally spaced apart holes (120), the drum (115) being rotatable such that, as the drum rotates in use, foodstuff (60) contained within the drum falls out of the bottom of the drum through the holes (120) into the reservoir (5);
wherein both the spacing between the laterally spaced apart holes (120) and the speed of rotation of the drum (115) are sufficient to ensure that, in use, a gap between adjacent pieces of foodstuff (60) is sufficient to prevent significant local cooling of the heated cooking liquid (10) as the foodstuff is drawn through the heated cooking liquid in the reservoir (5).

2. The food cooker of claim 1 wherein the first conveyor belt (15) forms a first curve and the second conveyor belt (20) forms a second curve, the first and second curves corresponding with one another and forming a curved path along which foodstuff (60) is drawn in use.

3. The food cooker of claim 2 wherein the first conveyor belt (15) is an endless conveyor belt and the first curve is created by a lower portion of the first conveyor belt hanging down under its own weight, and wherein the second conveyor belt (20) is an endless conveyor belt and the second curve is created by an upper portion of the second conveyor belt hanging down under its own weight.

4. The food cooker of any preceding claim wherein at least a portion of each of the first (15) and second (20) conveyor belts which define the path are pliable.

5. The food cooker of any preceding claim further comprising a gas burner (105) for heating the cooking liquid.

6. A method of cooking food comprising:
rotating a drum (115) having a plurality of laterally spaced apart holes (120) such that, as the drum rotates, foodstuff (60) contained within the drum falls out of the bottom of the drum through the holes into a reservoir (5);
receiving the foodstuff between two spaced apart, pliable conveyor belts (15, 20) moving in opposite directions and defining a path between them sized to receive the foodstuff (60); and
drawing the foodstuff (60) in a curved path through a heated cooking liquid (10) contained in the reservoir (5) using the conveyor belts, the foodstuff being submerged under the heated cooking liquid for at least part of the path;
wherein both the spacing between the laterally spaced apart holes (120) and the speed of rotation of the drum (115) are sufficient to ensure that a gap between adjacent pieces of foodstuff (60) is sufficient to prevent significant local cooling of the heated cooking liquid as the foodstuff is drawn through the heated cooking liquid in the reservoir.

## Patentansprüche

1. Ein Essenskocher mit Reservoir (5), geeignet für die Befüllung mit heißer Kochflüssigkeit (10). Das Reservoir hat über Folgendes zu verfügen:
ein Förderband (15), in eine erste Richtung beweglich, und ein zweites Förderband (20), in eine zweite, der ersten Richtung entgegengesetzte Richtung beweglich;
der Zwischenraum zwischen dem ersten und zweiten Förderband muss einen Pfad definieren, der zumindest teilweise unter dem Flüssigkeitsstand verläuft und in seiner Größe zur Aufnahme von Essen (60) geeignet ist. Die gegenläufigen Bewegungen der Förderbänder sollen Essen am Pfad entlang durch die heiße Kochflüssigkeit (10) des benutzten Reservoirs ziehen.
Der Essenskocher muss weiterhin über eine Trommel (115) verfügen, um Essen in das Reservoir zu transportieren. Die Trommel hat über Folgendes zu verfügen:
eine Vielzahl seitlicher Löcher mit Abstand (120), eine Rotationsfunktion der Trommel (115), damit das Essen am Boden der Trommel durch die Löcher (120) in das Reservoir (5) fällt.
Sowohl der Abstand zwischen den seitlichen Löchern (120) als auch die Rotationsgeschwindigkeit der Trommel (115) müssen ausreichend sein, damit bei der Benutzung eine Lücke zwischen Essensstücken (60) ausreicht, um eine stellenweise Abkühlung der heißen Kochflüssigkeit (10) zu verhindern, wenn das Essen durch die erhitzte Kochflüssigkeit im Reservoir gezogen wird (5).

2. Der Essenskocher aus Anspruch 1, wobei das erste Förderband (15) eine erste Kurve und das zweite Förderband (20) eine zweite Kurve formt, die aufeinander abgestimmt sind und einen gekurvten Pfad bilden, an dem beim Betrieb Essen (60) entlang gezogen wird.

3. Der Essenskocher aus Anspruch 2, wobei das erste Förderband (15) ein endloses Förderband ist und die erste Kurve durch einen unteren Teil des ersten Förderbandes geschaffen wird, der durch sein eigenes Gewicht durchhängt und wobei das zweite Förderband (20) ein endloses Förderband ist und die zweite Kurve durch einen oberen Teil des zweiten Förderbandes geschaffen wird, der durch sein eigenes Gewicht durchhängt.

4. Der Essenskocher aus vorangegangenen Ansprüchen, wobei mindestens ein Teil des ersten (15) und zweiten (20) Förderbandes, die den Pfad definieren, biegbar sind.

5. Der Essenskocher aus vorangegangenen Ansprüchen mit Gasbrenner (105) zum Erhitzen der Kochflüssigkeit.

6. Eine Kochmethode, die Folgendes umfasst:
Rotieren einer Trommel (115) mit einer Vielzahl seitlicher Löcher mit Abstand (120), so dass beim Rotieren der Trommel Essen (60) aus dem Boden der Trommel durch die Löcher in das Reservoir (5) fällt;
Zuführung von Essen zwischen zwei biegbaren Förderbändern (15, 20) mit Abstand zueinander, die sich in entgegengesetzte Richtungen bewegen und in ihrem Zwischenraum einen Pfad zur Zuführung von Essen definieren; sowie
Ziehen des Essens (60) auf einem gekurvten Pfad durch erhitzte Kochflüssigkeit (10) im Reservoir (5) mit Förderbändern, wobei das Essen zumindest auf einem Teil des Pfads in die erhitzte Kochflüssigkeit getaucht wird.
Sowohl der Abstand zwischen den seitlichen Löchern (120) als auch die Rotationsgeschwindigkeit der Trommel (115) müssen ausreichend sein, damit eine Lücke zwischen Essensstücken (60) ausreicht, um eine stellenweise Abkühlung
der heißen Kochflüssigkeit (10) zu verhindern, wenn das Essen durch die erhitzte Kochflüssigkeit im Reservoir gezogen wird.

## Revendications

1. Un appareil de cuisson d'aliments comprenant un réservoir (5) apte à être rempli d'un liquide de cuisson chauffé (10) à un niveau de liquide, le réservoir comprenant:
une première courroie transporteuse (15) déplaçable dans une première direction; et une deuxième courroie transporteuse (20) déplaçable dans une seconde direction opposée à la première direction;
la première et seconde courroie transporteuse étant espacées pour définir un passage entre eux dont au moins une partie passe en-dessous du niveau du liquide, le passage étant dimensionné pour recevoir le produit alimentaire (60) et les mouvements opposés des courroies transporteuses pour tirer la denrée alimentaire le long du passage à travers le liquide de cuisson chauffé (10) dans le réservoir en cours d'utilisation;
**caractérisé en ce que** l'appareil de cuisson d'aliments comprend en outre un tambour (115) pour distribuer le produit alimentaire dans le réservoir, le tambour comprenant:
une pluralité de trous espacés latéralement (120), le tambour (115) étant rotatif de telle sorte que, lorsque le tambour tourne en cours d'utilisation, le produit alimentaire (60) contenu à l'intérieur du tambour tombe du fond du tambour à travers les trous (120) dans le réservoir (5);
dans lequel à la fois l'espacement entre les orifices espacés latéralement (120) et la vitesse de rotation du tambour (115) sont suffisants pour faire en sorte que, en utilisation, un espace entre des pièces adjacentes du produit alimentaire (60) est suffisant pour éviter un important refroidissement local du liquide de cuisson chauffé (10) à mesure que le produit alimentaire est tiré à travers le liquide de cuisson chauffé dans le réservoir (5).

2. L'appareil de cuisson des aliments de la demande 1 , dans lequel la première courroie transporteuse (15) forme une première courbe et la deuxième courroie transporteuse (20) forme une deuxième courbe , la première et la seconde courbe correspondant l'une avec l'autre et formant un passage courbe le long duquel le produit alimentaire (60) est tirée en utilisation.

3. L'appareil de cuisson des aliments de la déclaration 2, dans lequel la première courroie transporteuse (15)est une bande transporteuse infinie et la première courbe est créée par une portion inférieure de la première courroie transporteuse qui pend sous son propre poids, et dans lequel la seconde courroie transporteuse (20) est une courroie transporteuse infinie et la seconde courbe est créée par une portion supérieure de la deuxième courroie transporteuse qui pend sous son propre poids.

4. L'appareil de cuisson d'aliments de toute demande précédente, dans lequel au moins une portion de chacune de la première (15) et seconde (20) courroies transporteuses qui définissent la trajectoire sont pliables.

5. L'appareil de cuisson d'aliments d'une quelconque demande précédente comprenant en outre un gaz brûleur (105) pour chauffer le liquide de cuisson.

6. Une méthode de cuisson des aliments, comprenant:
faire tourner un tambour (115) ayant une pluralité de trous espacés latéralement (120) de telle sorte que, lors de la rotation du tambour, le produit alimentaire (60) contenu à l'intérieur du tambour se situe tombe de la partie inférieure du tambour à travers les trous dans un réservoir (5);
recevoir le produit alimentaire entre deux courroies transporteuses pliables espacées (15, 20) se déplaçant dans des directions opposées et définissant un passage entre eux dimensionné pour recevoir le produit alimentaire (60); et
tirer le produit alimentaire (60) dans un trajet incurvé à travers un liquide de cuisson chauffé (10) contenu dans le réservoir (5) au moyen des courroies de transport, le produit alimentaire étant submergé sous le liquide de cuisson chauffé pendant au moins une partie du passage;
dans lequel à la fois l'espacement entre les orifices espacés latéralement (120) et la vitesse de rotation du tambour (115) sont suffisants pour faire en sorte qu'un écart entre les pièces adjacentes du produit alimentaire (60) est suffisant pour éviter un refroidissement local important du liquide de cuisson chauffé pendant que le produit alimentaire est tiré à travers le liquide de cuisson chauffé dans le réservoir.
